# EUROPEAN PATENT SPECIFICATION

(11) **EP 3 611 364 B1**
(45) Date of publication and mention of the grant of the patent: **23.06.2021**
(21) Application number: 17905663.5
(22) Date of filing: 12.04.2017
(51) Int. Cl.: F02G 1/055, F23D 1/00, F23H 9/02, F23K 3/14, F23B 30/00, F23B 30/04

(54) **BIOMASS COGENERATION SYSTEM**
KRAFT-WARMEKOPPLUNGSSYSTEM AUF DER BASIS VON BIOMASSE
SYSTEMS DE COGENERATION DE BIOMASSE

(43) Date of publication of application: 19.02.2020
(73) Proprietor: Kowa Co., Ltd., Fukuoka-shi, Fukuoka 815-0032 (JP)
(72) Inventor: TAKATA, Kazuhiko, Fukuoka-shi Fukuoka 815-0032 (JP); TAKATA, Kyoko, Fukuoka-shi Fukuoka 815-0032 (JP); KANEMITSU, Takashi, Kitakyushu-shi Fukuoka 807-0846 (JP)
(74) Representative: Horn Kleimann Waitzhofer Patentanwälte PartG mbB
(86) International application number: PCT/JP2017/015032
(87) International publication number: WO 2018/189846

(56) References cited:
- WO-A1-2010/117282
- CN-A- 103 604 211
- JP-A- H0 571 334
- JP-A- H0 719 008
- JP-A- 2004 263 572
- JP-A- 2009 014 279
- JP-A- 2010 096 446
- JP-A- 2010 096 446
- JP-A- 2011 251 226
- JP-A- 2011 251 226
- JP-A- 2013 087 695
- JP-U- S59 142 641
- US-A- 5 755 100
- US-A1- 2006 213 196
- US-A1- 2009 260 286

## Description

### Technical Field

The present invention relates to a biomass cogeneration (combined heat and power) system for producing heat and electrical power using biomass fuels.

### Background Art

In recent years, technologies for generating electricity using a gas turbine, a Stirling engine, or the like, driven by a high-temperature combustion gas produced by burning biomass (which refers to renewable organic resources of biological origin, other than fossil fuels) have been actively developed.

For example, Patent Literature 1 below (Japanese Laid-Open Patent Publication No. 2005-307860) discloses a technology in which ground biomass powder having a predetermined particle size and combustion air are supplied to a burner to burn the biomass powder and produce heat, and the heat is used as a heat source to drive a Stirling engine and generate electricity.

US 2006/213196 A1 discloses a Stirling engine-equipped cogeneration system that includes a combustion chamber, a burner unit installed to the combustion chamber, the burner unit driving combustion to generate exhaust gas within the combustion chamber, and a Stirling engine operating from a sealed operating fluid heated by the heater which is located within the combustion chamber facing the burner and subjected to the flow of exhaust gas generated within the combustion chamber.

JP 2010 096446 A discloses a compact combustion device for burning solid fuel. The combustion device includes a cylindrical body having a front end as an opening section and a rear end as a closed section, and having a double structure of an outer cylinder and an inner cylinder that are coaxially rotatable. A vent hole is formed on the closed section for supplying the air to an internal space of the nozzle through a ventilation passage between the inner cylinder and the outer cylinder. The combustion device further includes a supply opening for supplying a part of the air flowing in the ventilation passage to an internal space of the inner cylinder, a supply passage communicated with the internal space of the inner cylinder from a closed section side and supplying the solid fuel to the internal space of the inner cylinder, a blower for supplying the air to the vent hole, and a rotating driving means for rotating the cylindrical body. The cylindrical body is inclined so that the nozzle faces upward, an opening area between the outer cylinder and the inner cylinder at the opening section is equal to an opening area of the supply opening or more, and a pulverizing member for pulverizing the solid fuel is received in the internal space of the inner cylinder.

A similar combustion device is also disclosed in JP 2011 251226 A.

JP 2013 087695 A discloses a combustion furnace employing a double structure comprised of an outer cylinder and an inner cylinder. Air for combustion is supplied from an inlet of the inner cylinder and the outer circumference thereof. A side surface of a heat receiving part of a Stirling engine is surrounded with a ring-shaped passage, and combustion gas is blown from a through-hole provided on an inner sidewall. The combustion gas heat-exchanges with water sent with a circulation pump from a storage tank.

### Citation List

### [Patent Literature]

[PTL 1] Japanese Laid-Open Patent Publication No. 2005-307860

### Summary of Invention

### Technical Problem

However, the above-described conventional technology has the following disadvantages.

First, biomass must be ground to a powder having a predetermined particle size, for example, about 100 pm or less, before being used as a fuel. This means that the use of biomass not only requires large-scale grinding equipment in preparation for electricity generation but also requires great care for fuel management.

Therefore, it is a primary object of the present invention to provide a biomass cogeneration system that not only can use biomass directly as a biomass fuel even if the size and moisture content of the biomass slightly vary from piece to piece, but also has a simple system configuration and thus can achieve very high energy utilization efficiency.

### Solution to Problem

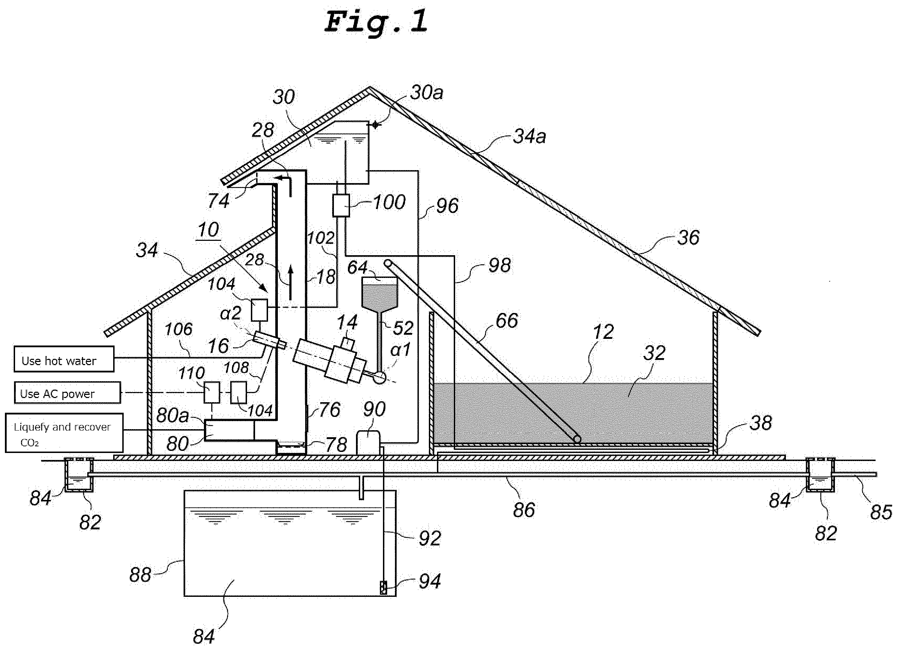

In order to achieve the above object, a biomass cogeneration system according to the present invention is configured as follows, for example, as shown in FIG. 1 to FIG. 3.

The biomass cogeneration system includes: a combustor 14 configured to combust a biomass fuel 12; a Stirling engine 16 configured to be operated by heat generated in the combustor 14 so as to output alternating-current power; and a flue gas duct 18 that connects the combustor 14 and the Stirling engine 18.

The combustor 14 includes: a cylindrical main chamber 20 having a double-wall structure including an outer casing 20a and an inner casing 20b that are coaxially rotatable; a cylindrical combustion chamber 22 connected to a front end of the cylindrical main chamber 20 and configured to combust the biomass fuel 12; and an air passage 24 formed by a space between the outer casing 20a and the inner casing 20b and configured to supply air to an interior of the inner casing 20b and an interior of the cylindrical combustion chamber 22. The cylindrical main chamber 20 and the cylindrical combustion chamber 22 are upwardly inclined with respect to a horizontal plane.

The air passage 24 is configured to supply 30% to 50% of a total amount of air in the air passage 24 to the interior of the inner casing 20b and 50 to 70% of the total amount of air in the air passage 24 to the interior of the cylindrical combustion chamber 22.

The Stirling engine 16 includes: an engine body 16a having a cylinder in which a displacer and a power piston are disposed; and a heat receiver 16b connected to one of longitudinal ends of the engine body 16a so as to be coaxial with the engine body 16a.

The combustor 14 and the Stirling engine 16 are arranged in such a manner that a rotation axis α1 of the cylindrical main chamber 20 of the combustor 14 and a central axis a2 of the Stirling engine 16 are coaxially aligned, whereby the heat receiver 16b of the Stirling engine 16 disposed in the flue gas duct 18 faces the interior of the cylindrical combustion chamber 22 on the rotation axis α1 of the cylindrical main chamber 20 of the combustor 14.

For example, the present invention has the following advantageous effects.

The use of the combustor configured as described above makes it possible to directly use biomass, such as wood wastes (sawdust) and rice hulls, as a fuel, without the need to grind the biomass fuel to a uniform particle size.

In addition, since the combustor and the Stirling engine are arranged in such a manner that the rotation axis of the cylindrical main chamber of the combustor and the central axis of the Stirling engine are coaxially aligned, whereby the heat receiver of the Stirling engine disposed in the flue gas duct faces the interior of the cylindrical combustion chamber on the rotation axis of the cylindrical main chamber of the combustor, heat generated in the combustor can be supplied to the Stirling engine efficiently to operate it.

The biomass cogeneration system according to the present invention further includes a hot water tank 30 containing water 26. In this cogeneration system, the hot water tank 30 is connected in communication with an upper part of the flue gas duct 18 so as to allow the water 26 in the hot water tank 30 to exchange heat with a high-temperature flue gas 28 in the flue gas duct 18.

In this case, it is possible not only to efficiently generate electricity using the Stirling engine but also to efficiently recover and utilize waste heat of combustion flue gas generated in the combustor.

The biomass cogeneration system according to the present invention further includes a biomass stockyard 32 for storing the biomass fuel 12. In this cogeneration system, the biomass stockyard 32 is located in a building 34, where the combustor 14, the Stirling engine 16, the flue gas duct 18, and the hot water tank 30 are also located, a portion of a roof 34a of the building 34 above the biomass stockyard 32 is formed of a transparent material 36 that allows sunlight to pass through, and the biomass stockyard 32 is provided with a heater 38 configured to dry the biomass fuel 12 using hot water in the hot water tank 30.

In this case, it is possible to use the energy of the biomass fuel more effectively and, as a result, to reduce the costs of generating electricity and supplying heat.

### Advantageous Effects of the Invention

According to the present invention, it is possible to provide a biomass cogeneration system that not only can use biomass directly as a biomass fuel even if the size and moisture content of the biomass slightly vary from piece to piece, but also has a simple system configuration and thus can achieve very high energy utilization efficiency.

### Brief Description of Drawings

[FIG. 1] FIG. 1 is a flow diagram showing an overview of a biomass cogeneration system according to an embodiment of the present invention.
[FIG. 2] FIG. 2 is a partial cross-sectional view showing an example of a combustor of the present invention.
[FIG. 3] FIG. 3 a partial cross-sectional view illustrating a main part of FIG. 1.

### Description of Embodiments

Hereinafter, an embodiment of the present invention will be described with reference to FIG. 1 to FIG. 3.

FIG. 1 is a diagram showing an overview of a biomass cogeneration system 10 according to an embodiment of the present invention. The biomass cogeneration system 10 of the present embodiment is an apparatus for producing heat and electrical power by burning a biomass fuel 12 including wood wastes such as sawdust and rice hulls. As shown in FIG. 1, the system 10 includes a combustor 14, a Stirling engine 16, and a flue gas duct 18.

The combustor 14 is a device 14 for burning the biomass fuel 12 to obtain thermal energy, and includes a cylindrical main chamber 20 and a cylindrical combustion chamber 22 as main components. Primary combustion is performed in the cylindrical main chamber 20, and secondary combustion is performed in the cylindrical combustion chamber 22. Since the primary and secondary combustions are performed in the combustor 14 as a single unit, the interior of the combustor 14 can always be maintained at a high temperature. Thus, all of the biomass fuel 12 introduced into the combustor 14 can be completely burned out even if the size and moisture content of the biomass fuel 12 slightly vary from piece to piece.

Furthermore, the front end of this combustor 14 is open and the rear end thereof is closed. Combustion heat is released from the open front end, while the biomass fuel 12 and air are introduced from the rear end.

The cylindrical main chamber 20 is a cylindrical body having a double-wall structure including an outer casing 20a and an inner casing 20b that are coaxially rotatable. The outer casing 20a surrounds the inner casing 20, with a predetermined spacing therebetween. As the cylindrical main chamber 20 rotates, the interior of the inner casing 20b also rotates. This rotation allows the biomass fuel 12 in the interior of the inner casing 20b to be shaken while being burned. As a result, every piece of the biomass fuel 12 can be exposed to air and flames and thus the primary combustion in the inner casing 20b is promoted.

The cylindrical combustion chamber 22 having the same cylindrical shape is connected to the opening of the cylindrical main chamber 20. When the chambers 20 and 22 are connected, a portion of the outer casing 20a is fitted inside the cylindrical combustion chamber 22, which means that one end (i.e., a downstream end) of the space between the inner casing 20b and the outer casing 20a is connected directly to the interior of the cylindrical combustion chamber 22. After the primary combustion, the pieces of the biomass fuel 12 physically move upward due to a decrease in the mass and an increase in the temperature, and these moving biomass fuel 12 pieces are captured and burned at a higher temperature in the cylindrical combustion chamber 22.

Here, the cylindrical main chamber 20 and the cylindrical combustion chamber 22 are upwardly inclined with respect to the horizontal plane. "Upwardly inclined" as used herein means that the opening of the cylindrical combustion chamber 22 faces obliquely upward from the horizontal plane. Since the cylindrical main chamber 20 and the cylindrical combustion chamber 22 are inclined in such a manner, the biomass fuel 12 that has been burned at a predetermined temperature in the interior of the inner casing 20b reduces its mass and moves upward as the heat generated by the combustion of the fuel 12 moves upward. Since the cylindrical combustion chamber 22 is located at a higher position, the biomass fuel 12 moves upward to the cylindrical combustion chamber 22 and is burned there. Thus, the secondary combustion is performed in the cylindrical combustion chamber 22.

The space between the outer casing 20a and the inner casing 20b serves as an air passage 24. When air is introduced into the air passage 24 through an air supply passage 42, the air passage 24 supplies the air to the interior of the inner casing 20b and the interior of the cylindrical combustion chamber 22. Here, the air supply passage 42 is configured to draw air from outside through an air feed fan 44 and introduce the air into the air passage 24 through an air inlet 46 provided at the rear end of the outer casing 20a. When the air is thus introduced, the air passage 24 carries the air to supply a portion of the air to the interior of the inner casing 20b and the remaining portion of the air to the interior of the cylindrical combustion chamber 22.

The inner casing 20b includes air outlet holes 48 formed through the wall thereof from the outer circumferential surface to the inner circumferential surface. Since the air outlet holes 48 communicate with the air passage 24, a portion of the air passing through the air passage 24 is introduced into the interior of the inner casing 20b through the air outlet holes 48. Thus, the air passage 24 is configured to supply air to the interior of the inner casing 20b through the air outlet holes 48.

On the other hand, the front end of the air passage 24 is connected in communication with the interior of the cylindrical combustion chamber 22. Thus, the air passage 24 is configured to supply air to the interior of the cylindrical combustion chamber 22 through the front end.

The air passage 24 is configured to supply 30% to 50% of the total amount of air to be supplied to the combustor 14 to the interior of the inner casing 20b, and 50 to 70% of the total amount of air to the interior of the cylindrical combustion chamber 22. In other words, the amount of air supplied to the cylindrical combustion chamber 22 is larger than that of air supplied to the inner casing 20b. This is because the secondary combustion in the cylindrical combustion chamber 22 must be performed at a higher temperature and requires more air, and therefore a larger amount of air is supplied to the cylindrical combustion chamber 22 to perform the secondary combustion optimally therein.

The ratio between the amount of air to be supplied to the inner casing 20b through the air passage 24 and the amount of air to be supplied to the cylindrical combustion chamber 22 through the air passage 24 can be adjusted appropriately by changing the position, number, opening area, shape, angle, etc. of the air outlet holes 48.

For example, the ratio between the amount of air to be supplied to the interior of the inner casing 20b and the amount of air to be supplied to the interior of the cylindrical combustion chamber 22 can be adjusted so that the latter amount is larger than the former amount by changing the total opening area of the air outlet holes 48 and the total opening area of the connection between the downstream end of the air passage 24 and the cylindrical combustion chamber 22 so that the latter area is larger than the former area.

In the combustor 14, the primary combustion is performed in the inner casing 20b located at a physically lower position while 30 to 50% of the total amount of air is being supplied to the inner casing 20b, and subsequent to this primary combustion, the secondary combustion is performed in the cylindrical combustion chamber 22 located at a physically higher position than the inner casing 20b while 50 to 70% of the total amount of air is being supplied to the cylindrical combustion chamber 22. Thus, this sequence of the primary and secondary combustions ensures the combustion of the biomass fuel 12 in the combustor 14.

The downstream end of a fuel feed pipe 50 for feeding the biomass fuel 12 into the interior of the inner casing 20b is coaxially connected to the closed end of the inner casing 20b so as to communicate with the inner casing 20b. Furthermore, the downstream end of a fuel supply passage 52 extending downwardly from above to supply the biomass fuel 12 stored in a biomass stockyard 32 to be described later is connected to the upstream end of the fuel feed pipe 50. A screw conveyor 54 is provided along the entire length of the fuel feed pipe 50 from the downstream end of the fuel supply passage 52. Thus, the biomass fuel 12 supplied through the fuel supply passage 52 is carried into the interior of the inner casing 20b by the screw conveyor 54.

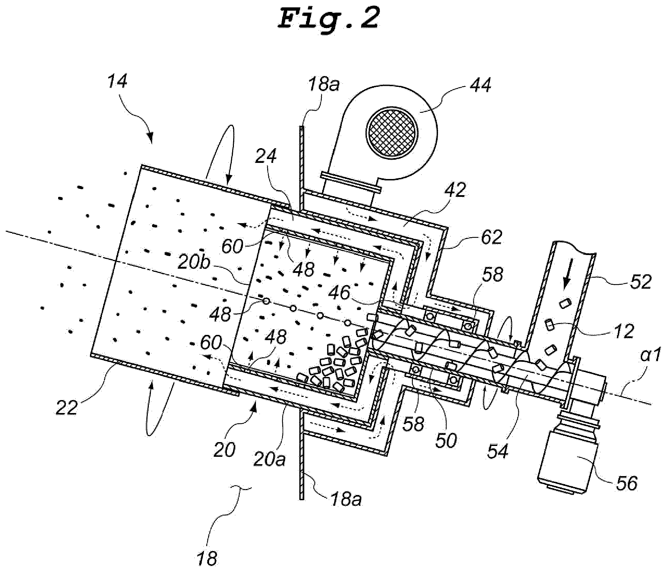

A reference numeral 56 in FIG. 2 refers to a motor for rotating the screw conveyor 54, and a reference numeral 58 refers to a bearing supporting the fuel feed pipe 50 configured to rotate in accordance with the rotation of the inner casing 20b.

The combustor 14 generally configured as described above is supported by a frame member 60 and a support member 62, and the opening side of the cylindrical main chamber 20 is secured to a side wall 18a of the flue gas duct 18. Therefore, the entire cylindrical combustion chamber 22 and a portion of the cylindrical main chamber 20 on its opening side are disposed in the flue gas duct 18.

The path for supplying the biomass fuel 12 to the combustor 14 is described in more detail. A biomass tank 64 for temporarily storing the biomass fuel 12 ready to be supplied to the combustor 14 is connected to the upstream end of the above-mentioned fuel supply passage 52. The biomass fuel 12 stored in the biomass stockyard 32 is carried to the biomass tank 64 using a transfer machine 66 such as a conveyor.

Here, in the biomass cogeneration system 10 of the present embodiment, the biomass stockyard 32 is located in a building 34, where the combustor 14, the Stirling engine 16, the flue gas duct 18, and a hot water tank 30 to be described later are also located. A portion of a roof 34a of the building 34 above the biomass stockyard 32 is formed of a transparent material 36 that allows sunlight to pass through. Examples of the transparent material 36 of the roof 34a include glass and transparent resin films such as a fluororesin film.

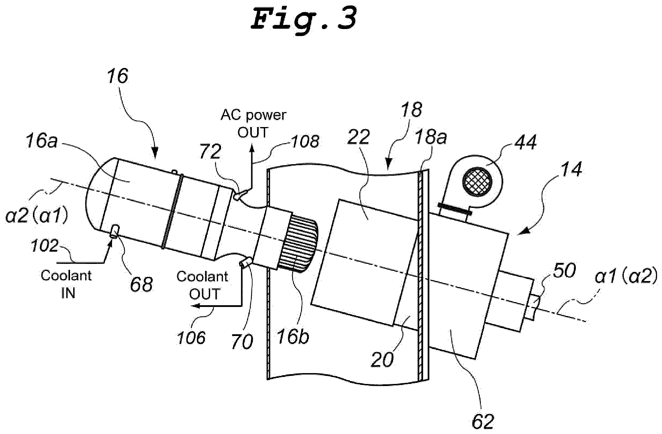

The Stirling engine 16 is a device configured to be operated by heat generated in the above-described combustor 14 so as to output alternating-current power, and includes an engine body 16a having a cylinder in which a displacer and a power piston are disposed (not shown) and a heat receiver 16b connected to one of the longitudinal ends of the engine body 16a so as to be coaxial therewith (see FIG. 3). The engine body 16a is provided with a coolant inlet 68, a coolant outlet 70, and an output terminal 72 for outputting alternating-current power converted from thermal energy in the engine. The heat receiver 16b is an assembly of many heat receiving fins to maximize the heat receiving area.

For example, a Qnergy's free-piston Stirling engine (7 kW) can be suitably used as the Stirling engine 16.

Here, the Stirling engine 16 is secured to the side wall 18a of the flue gas duct 18 in such a manner that the rotation axis α1 of the cylindrical main chamber 20 of the above-described combustor 14 and the central axis a2 of the above-described Stirling engine 16 are coaxially aligned. In this arrangement, the heat receiver 16b of the Stirling engine 16 disposed in the flue gas duct 18 faces the interior of the cylindrical combustion chamber 22 on the rotation axis α1 of the cylindrical main chamber 20 of the combustor 14.

The flue gas duct 18 not only connects the combustor 14 and the Stirling engine 16 but also serves as a channel or conduit for carrying a high-temperature flue gas 28 generated by combustion of the biomass fuel 12 in the combustor 14 to a predetermined gas outlet 74 (see FIG. 1). The flue gas duct 18 is generally made of a metallic material such as a galvanized steel sheet, a galvalume steel sheet, or a stainless steel sheet.

The flue gas duct 18 is provided to stand upright and extend upward from the ground, and the combustor 14 and the Stirling engine 16 are secured to a middle portion of the flue gas duct 18. Below the middle portion of the flue gas duct 18 where the combustor 14 and the Stirling engine 16 are secured, an inspection port 76 for inspecting the interior of the duct opens, and an ash pan 78 is disposed at the lower end of the flue gas duct 18. The lower end of the flue gas duct 18 is extended horizontally, and a compressor 80a of a carbon dioxide recovery device 80 is connected to the extended portion. The carbon dioxide recovery device 80 is a device for separating carbon dioxide from the flue gas 28 discharged into the flue gas duct 18 by an adsorption separation technique such as chemical adsorption or physical adsorption and then typically liquefying the carbon dioxide to recover it from the flue gas 28.

On the other hand, a hot water tank 30 containing water 26 is provided integrally with an upper part of the flue gas duct 18 (that is, connected in communication with the upper part of the flue gas duct 18) so as to allow the water 26 to exchange heat with a high-temperature flue gas 28 in the flue gas duct 18.

This hot water tank 30 is made of a metal material having high thermal conductivity, rust resistance (corrosion resistance), etc. or a plastic material containing a thermally conductive filler. In FIG. 1, a reference numeral 30a refers to a pressure reducing valve for reducing the pressure in the hot water tank 30 because the pressure in the tank 30 increases when hot water is produced by the above-described heat exchange.

Tap water or well water may be used as the water 26 to be supplied to the hot water tank 30 and heated into hot water. However, for example, when the biomass cogeneration system 10 includes the Stirling engine 16 with an output of less than 10 kW and is intended for use in private homes, small-sized office buildings, etc., it is preferable to use rainwater 84 flowing into a gutter 82 provided around the building 34, as shown in FIG. 1. The rainwater 84 is collected, through a water collecting pipe 86, in a rainwater storage pit 88 formed underground, and then supplied from the rainwater storage pit 88 to the hot water tank 30 using a water pump 90. It should be noted that a reference numeral 85 in FIG. 1 refers to a drain for discharging an excess portion of the rainwater 84 collected in the gutter 82.

Two pipes, i.e., a suction-side pipe 92 and a delivery-side pipe 96, are connected to the water pump 90. The upstream end of the suction-side pipe 92 is disposed near the bottom of the rainwater storage pit 88 and is provided with a strainer 94 for removing sand and dust from the rainwater 84. The downstream end of the delivery-side pipe 96 is connected to a lower part of the hot water tank 30 near the bottom thereof.

It is preferable to add a disinfectant or sanitizer such as calcium hypochlorite (bleaching powder) or sodium hypochlorite to the rainwater 84 stored in the rainwater storage pit 88 to prevent degradation of the rainwater 84 and growth of bacteria therein.

The upstream end of a high-temperature water delivery pipe 98 is connected to the upper part of the hot water tank 30. The flow of the water 26 as hot water in the high-temperature water delivery pipe 98 is controlled by a hot water controller 100 provided in the middle of the high-temperature water delivery pipe 98. A portion of the high-temperature water delivery pipe 98 located downstream from the hot water controller 100 is extended to the bottom of the biomass stockyard 32 and laid in a pattern of alternating straight lines and U-shaped lines below the bottom. Thus, the high-temperature water delivery pipe 98 laid in rows across the bottom serves as a heater 38.

The upstream end of a low-temperature water delivery pipe 102 is connected to a portion of the bottom of the hot water tank 30 near the delivery-side pipe 96 to communicate with the tank 30. The flow of the water 26 in the low-temperature water delivery pipe 102 is also controlled by the above-mentioned hot water controller 100.

The downstream end of the low-temperature water delivery pipe 102 is connected to the coolant inlet 68 of the Stirling engine 16, via a power generator controller 104 for controlling the Stirling engine 16. This means that the water 26 supplied to the Stirling engine 16 through the low-temperature water delivery pipe 102 is used as a coolant.

The water 26 used as a coolant in the Stirling engine 16 draws heat in the engine, and the resulting high-temperature hot water is discharged from the coolant outlet 70. The upstream end of a hot water supply pipe 106 is connected to the coolant outlet 70, and very high-temperature hot water is supplied to facilities, etc. that need hot water, through the hot water supply pipe 106.

It should be noted that in the Stirling engine 16, not only hot water is produced as described above, but also electrical power is produced for the original purpose. More specifically, when the Stirling engine 16 is operated, alternating current is generated, transmitted once to the power generator controller 104 through a power line 108 connected to the output terminal 72, and then converted to direct current. The direct current thus converted in the power generator controller 104 is converted back to alternating current in a power conditioner 110 connected in the middle of the power line 108, and the resulting alternating current with stable voltage and frequency is supplied to consumers. In the embodiment shown in the figures, the power line 108 splits into two branches in the power conditioner 110 and one of the branches is connected to the carbon dioxide recovery device 80. This means that in this embodiment, a portion of the electric power generated by the Stirling engine 16 can be used to operate the carbon dioxide recovery device 80.

In order to operate the biomass cogeneration system 10 configured as described above, first, the transfer machine 66, the combustor 14, the hot water controller 100, the power generator controller 104, etc. are operated using an external power source not shown. Upon operation of these devices, the stock of the biomass fuel 12 in the biomass stockyard 32 is delivered to the biomass tank 64 by the transfer machine 66 and then fed to the fuel feed pipe 50 through the fuel supply passage 52.

The biomass fuel 12 fed to the fuel feed pipe 50 is carried into the interior of the inner casing 20b of the combustor 14 by the screw conveyor 54. In the interior of the inner casing 20b, the biomass fuel 12 is ignited using an igniter or the like not shown. When the biomass fuel 12 thus ignited is completely burned through the primary combustion in the interior of the inner casing 20b and the secondary combustion in the interior of the cylindrical combustion chamber 22, a high-temperature flue gas 28 is produced and then discharged into the flue gas duct 18.

Thus, the heat generated by the combustion of the biomass fuel 12 in the combustor 14 is used to start the operation of the Stirling engine 16, thereby starting the operation of the entire system. Thus, heat generation using hot water and electric power generation are performed.

According to the biomass cogeneration system 10 of the present embodiment, since the combustor 14 is configured as described above, the biomass fuel 12 in the form of wood wastes and rice hulls can be directly used without the need to grind the biomass fuel 12 to a uniform particle size.

Furthermore, since the rotation axis α1 of the cylindrical main chamber 20 of the combustor 14 is upwardly inclined with respect to the horizontal plane and the rotation axis α1 and the central axis a2 of the Stirling engine 16 are coaxially aligned, the hot water tank 30 can be connected in communication with an upper part of the flue gas duct 18 serving as a highest-temperature region of the duct 18. Therefore, the recovery and utilization of waste heat can be maximized.

It should be noted that the above embodiment shows the case where a relatively low temperature portion of the water 26 in the hot water tank 30 is used as the coolant for the Stirling engine 16, but tap water or well water may be used, or the water 26 in the hot water tank 30 and tap water or the like may be used in combination, as the coolant for the Stirling engine 16.

The entire surface of the flue gas duct 18 and the hot water tank 30 may be covered with a heat insulating material (not shown). The efficiency of recovery and utilization of waste heat can be further improved by the heat insulation.

### Reference Signs List

10: Biomass cogeneration system
12: Biomass fuel
14: Combustor
16: Stirling engine
16a: Engine body
16b: Heat receiver
18: Flue gas duct
20: Cylindrical main chamber
20a: Outer casing
20b: Inner casing
22: Cylindrical combustion chamber
24: Air passage
26: Water
28: Flue gas
30: Hot water tank
32: Biomass stockyard
34: Building
34a: Roof
36: Transparent material
38: Heater
α1: Rotation axis (of cylindrical main chamber of combustor)
a2: Central axis (of Stirling engine)

## Claims

1. A biomass cogeneration system comprising:
a combustor (14) configured to combust a biomass fuel (12);
a Stirling engine (16) configured to be operated by heat generated in the combustor (14) so as to output alternating-current power; and
a flue gas duct (18) that connects the combustor (14) and the Stirling engine (16),
wherein the combustor (14) and the Stirling engine (16) are arranged in such a manner that an axis (α1) of the combustor (14) and a central axis (a2) of the Stirling engine (16) are coaxially aligned,
wherein
the combustor (14) includes:
a cylindrical main chamber (20) having a double-wall structure including an outer casing (20a) and an inner casing (20b) that are coaxially rotatable;
a cylindrical combustion chamber (22) connected to a front end of the cylindrical main chamber (20) and configured to combust the biomass fuel (12); and
an air passage (24) formed by a space between the outer casing (20a) and the inner casing (20b) and configured to supply air to an interior of the inner casing (20b) and an interior of the cylindrical combustion chamber (22),
the cylindrical main chamber (20) and the cylindrical combustion chamber (22) are upwardly inclined with respect to a horizontal plane,
the air passage (24) is configured to supply 30% to 50% of a total amount of air in the air passage (24) to the interior of the inner casing (20b) and 50 to 70% of the total amount of air in the air passage (24) to the interior of the cylindrical combustion chamber (22),
the Stirling engine (16) is a free-piston Stirling engine including: an engine body (16a) having a cylinder in which a displacer and a power piston are disposed; and the heat receiver (16b) connected to one of longitudinal ends of the engine body (16a) so as to be coaxial with the engine body (16a), and
the axis (α1) of the combustor (14) that is coaxially aligned with the central axis (a2) of the Stirling engine is a rotation axis (α1) of the cylindrical main chamber (20), whereby the heat receiver (16b) of the Stirling engine (16) disposed in the flue gas duct (18) faces the interior of the cylindrical combustion chamber (22) on the rotation axis (α1) of the cylindrical main chamber (20) of the combustor (14),
the biomass cogeneration system further comprising:
a hot water tank (30) containing water (26), wherein the hot water tank (30) is connected in communication with an upper part of the flue gas duct (18) so as to allow the water (26) in the hot water tank (30) to exchange heat with a high-temperature flue gas (28) in the flue gas duct (18); and
a biomass stockyard (32) for storing the biomass fuel (12),
wherein the biomass stockyard (32) is located in a building (34), where the combustor (14), the Stirling engine (16), the flue gas duct (18), and the hot water tank (30) are also located, and a portion of a roof (34a) of the building (34) above the biomass stockyard (32) is formed of a transparent material (36) that allows sunlight to pass through, and
the biomass stockyard (32) is provided with a heater (38) configured to dry the biomass fuel (12) using hot water in the hot water tank (30).

## Patentansprüche

1. Biomasse-Kraft-Wärme-Kopplungs-System, aufweisend:
eine Brennkammer (14), die dazu eingerichtet ist, einen Biomasse-Brennstoff (12) zu verbrennen;
einen Stirling-Motor (16), der dazu eingerichtet ist, durch in der Brennkammer (14) erzeugte Wärme betrieben zu werden, um Wechselstromenergie abzugeben; und
einen Rauchgaskanal (18), der die Brennkammer (14) und den Stirling-Motor (16) verbindet,
wobei die Brennkammer (14) und der Stirling-Motor (16) derart angeordnet sind, dass eine Achse (α1) der Brennkammer (14) und eine Mittelachse (a2) des Stirling-Motors (16) koaxial ausgerichtet sind,
wobei
die Brennkammer (14) aufweist:
eine zylindrische Hauptkammer (20) mit einer doppelwandigen Struktur, die ein äußeres Gehäuse (20a) und ein inneres Gehäuse (20b) aufweist, die koaxial drehbar sind;
eine zylindrische Brennkammer (22), die mit einem vorderen Ende der zylindrischen Hauptkammer (20) verbunden ist und dazu eingerichtet ist, den Biomasse-Brennstoff (12) zu verbrennen; und
einen Luftdurchgang (24), der durch einen Raum zwischen dem äußeren Gehäuse (20a) und dem inneren Gehäuse (20b) gebildet ist und dazu eingerichtet ist, Luft in ein Inneres des inneren Gehäuses (20b) und ein Inneres der zylindrischen Brennkammer (22) zuzuführen,
wobei die zylindrische Hauptkammer (20) und die zylindrische Brennkammer (22) in Bezug auf eine horizontale Ebene schräg nach oben verlaufen,
wobei der Luftdurchgang (24) dazu eingerichtet ist, 30 % bis 50 % einer Gesamtmenge an Luft im Luftdurchgang (24) in das Innere des inneren Gehäuses (20b) und 50 bis 70 % der Gesamtmenge an Luft im Luftdurchgang (24) in das Innere der zylindrischen Brennkammer (22) zuzuführen,
wobei der Stirling-Motor (16) ein Freikolben-Stirling-Motor ist, der aufweist: einen Motorkörper (16a) mit einem Zylinder, in dem ein Verdränger und ein Kraftkolben angeordnet sind; und den Wärmeempfänger (16b), der derart mit einem der Längsenden des Motorkörpers (16a) verbunden ist, dass er koaxial mit dem Motorkörper (16a) ist, und
die Achse (α1) der Brennkammer (14), die koaxial zur Mittelachse (a2) des Stirling-Motors ausgerichtet ist, eine Rotationsachse (α1) der zylindrischen Hauptkammer (20) ist, wobei der im Abgaskanal (18) angeordnete Wärmeempfänger (16b) des Stirling-Motors (16) dem Inneren der zylindrischen Brennkammer (22) auf der Rotationsachse (α1) der zylindrischen Hauptkammer (20) der Brennkammer (14) zugewandt ist,
wobei das Biomasse-Kraft-Wärme-Kopplungs-System ferner aufweist:
einen Heißwassertank (30), der Wasser (26) enthält, wobei der Heißwassertank (30) derart mit einem oberen Teil des Rauchgaskanals (18) in Verbindung steht, dass dem Wasser (26) in dem Heißwassertank (30) ermöglicht wird, Wärme mit einem Hochtemperatur-Rauchgas (28) in dem Rauchgaskanal (18) auszutauschen; und
ein Biomasse-Lager (32) zum Speichern des Biomasse-Brennstoffs (12),
wobei das Biomasse-Lager (32) in einem Gebäude (34) angeordnet ist, wo auch die Brennkammer (14), der Stirling-Motor (16), der Rauchgaskanal (18) und der Heißwassertank (30) angeordnet sind, und ein Abschnitt eines Dachs (34a) des Gebäudes (34) über dem Biomasse-Lager (32) aus einem transparenten Material (36) gebildet ist, das ein Durchtreten von Sonnenlicht ermöglicht, und
das Biomasse-Lager (32) mit einer Heizeinrichtung (38) versehen ist, die dazu eingerichtet ist, den Biomasse-Brennstoff (12) unter Verwendung von heißem Wasser in dem Heißwassertank (30) zu trocknen.

## Revendications

1. Système de cogénération à base de biomasse, comprenant :
un appareil de combustion (14) conçu pour brûler un biocombustible (12) ;
un moteur Stirling (16) conçu pour être mis en œuvre par la chaleur générée dans l'appareil de combustion (14) de façon à délivrer de la puissance en courant alternatif ; et
un conduit de gaz de cheminée (18) qui relie l'appareil de combustion (14) et le moteur Stirling (16),
dans lequel l'appareil de combustion (14) et le moteur Stirling (16) sont disposés d'une manière telle qu'un axe (α1) de l'appareil de combustion (14) et un axe central (a2) du moteur Stirling (16) soient alignés coaxialement,
dans lequel l'appareil de combustion (14) comprend :
une chambre principale cylindrique (20) comportant une structure à double paroi comprenant une enveloppe extérieure (20a) et une enveloppe intérieure (20b) qui sont coaxialement mobiles en rotation ;
une chambre de combustion cylindrique (22) reliée à une extrémité frontale de la chambre principale cylindrique (20) et conçue pour brûler le biocombustible (12) ; et
un passage d'air (24) formé par un espace séparant l'enveloppe extérieure (20a) et l'enveloppe intérieure (20b) et conçu pour alimenter en air l'intérieur de l'enveloppe intérieure (20b) et l'intérieur de la chambre de combustion cylindrique (22),
la chambre principale cylindrique (20) et la chambre de combustion cylindrique (22) sont inclinées vers le haut par rapport à un plan horizontal,
le passage d'air (24) est conçu pour délivrer de 30 % à 50 % d'une quantité totale d'air dans le passage d'air (24) à l'intérieur de l'enveloppe intérieure (20b) et de 50 à 70 % de la quantité totale d'air dans le passage d'air (24) à l'intérieur de la chambre de combustion cylindrique (22),
le moteur Stirling (16) est un moteur Stirling à piston libre, comprenant : un corps de moteur (16a) comportant un cylindre dans lequel sont disposés un piston déplaceur et un piston de puissance ; et le récepteur de chaleur (16b) est relié à l'une des extrémités longitudinales du corps de moteur (16a) de façon à être coaxial au corps de moteur (16a), et
l'axe (α1) de l'appareil de combustion (14) qui est aligné coaxialement avec l'axe central (a2) du moteur Stirling est un axe de rotation (α1) de la chambre principale cylindrique (20), moyennant quoi le récepteur de chaleur (16b) du moteur Stirling (16) disposé dans le conduit de gaz de cheminée (18) est orienté vers l'intérieur de la chambre de combustion cylindrique (22) sur l'axe de rotation (α1) de la chambre principale cylindrique (20) de l'appareil de combustion (14),
le système de cogénération à base de biomasse comprenant en outre :
un réservoir d'eau chaude (30) contenant de l'eau (26), dans lequel le réservoir d'eau chaude (30) est relié en communication avec une partie supérieure du conduit de gaz de cheminée (18) de façon à permettre un échange de la chaleur de l'eau (26) contenue dans le réservoir d'eau chaude (30) avec un gaz de cheminée à haute température (28) se trouvant dans le conduit de gaz de cheminée (18) ; et
un lieu de stockage de biomasse (32) destiné à contenir le biocombustible (12),
dans lequel le lieu de stockage de biomasse (32) est situé dans un bâtiment (34), à l'endroit où sont également situés l'appareil de combustion (14), le moteur Stirling (16), le conduit de gaz de cheminée (18) et le réservoir d'eau chaude (30), et une partie d'un toit (34a) du bâtiment (34) situé au-dessus du lieu de stockage de biomasse (32) est formée d'un matériau transparent (36) à travers lequel peut passer la lumière du soleil, et
le lieu de stockage de biomasse (32) est pourvu d'un élément chauffant (38) conçu pour sécher le biocombustible (12) au moyen de l'eau chaude contenue dans le réservoir d'eau chaude (30).
